# EUROPEAN PATENT SPECIFICATION

(11) **EP 2 018 771 B1**
(45) Date of publication and mention of the grant of the patent: **30.05.2012**
(21) Application number: 07734237.6
(22) Date of filing: 06.04.2007
(51) Int. Cl.: H04N 9/31, G02B 7/00, G02B 21/14

(54) **PROJECTION APPARATUS PROVIDED WITH AN ADJUSTABLE FILTER SYSTEM AND METHOD THEREOF FOR ADJUSTING THE COLOUR COMPONENTS OF A LIGHT BEAM**
MIT EINEM VERSTELLBAREN FILTERSYSTEM VERSEHENE PROJEKTIONSVORRICHTUNG UND VERFAHREN DAFÜR ZUR EINSTELLUNG DER FARBKOMPONENTEN EINES LICHTSTRAHLS
APPAREIL DE PROJECTION COMPRENANT UN SYSTÈME DE FILTRE RÉGLABLE ET PROCÉDÉ DE RÉGLAGE PERMETTANT LE RÉGLAGE DES COMPOSANTES DE COULEUR D'UN FAISCEAU LUMINEUX

(30) Priority: 13.04.2006 IT TO20060276
(43) Date of publication of application: 28.01.2009
(73) Proprietor: SIM2 Multimedia S.p.A., 33170 Pordenone (IT)
(72) Inventor: BARAZZA, Giorgio, I-33077 Sacile (IT)
(74) Representative: Dini, Roberto
(86) International application number: PCT/IB2007/000918
(87) International publication number: WO 2007/119140

(56) References cited:
- US-A1- 2004 135 975

## Description

The present invention relates to a projection apparatus, in particular a videoprojector, according to the preamble of claim 1, and to a method for adjusting a light beam in a projection system.

In known videoprojectors, a light source generates a polychromatic light beam with a wide spectrum which is capable of reproducing most of the colours that can be perceived by the human eye.

Since such colours are obtained as a combination of three primary colours, in order to project the desired colours it is first necessary to extract said primary colours (typically red, green and blue) from the light beam generated by the light source in a condition being as saturated as possible (i.e. positioned as much as possible at the outline of the chromaticity diagram defined by the Commission Internationale de l'Eclarage).

To this end, many systems using filters and/or prisms are available.

According to a first known solution, a colour wheel, essentially consisting of three band-pass filters occupying three sectors of the wheel, is placed in front of the lamp. As it rotates, the wheel sequentially lets through the components of red, green and blue light of the beam generated by the lamp.

The light beams output by the colour wheel are focused onto one or more DMD (Digital Micromirror Device) panels, consisting of a plurality of micromirrors (usually made of aluminium) which rotate about a diagonal and which are adapted to reflect the coloured light beams within a projection lens for the purpose of sending them to a screen.

The array of micromirrors is de facto the array of pixels of the image to be projected.

The colour of each pixel perceived by the human eye watching the screen will be the result of the integration of the projected green, blue and red light components.

If, for example, a pixel must be yellow, during the transmission of the green and red light the corresponding micromirror will be turned in order to reflect the light inside the projection lens, whereas during the transmission of the blue light said micromirror will be turned in order to reflect the light outside the projection lens.

The drawback of this solution is partly related to the light sources employed.

At present, high-pressure mercury-vapor lamps or xenon lamps are mostly used.

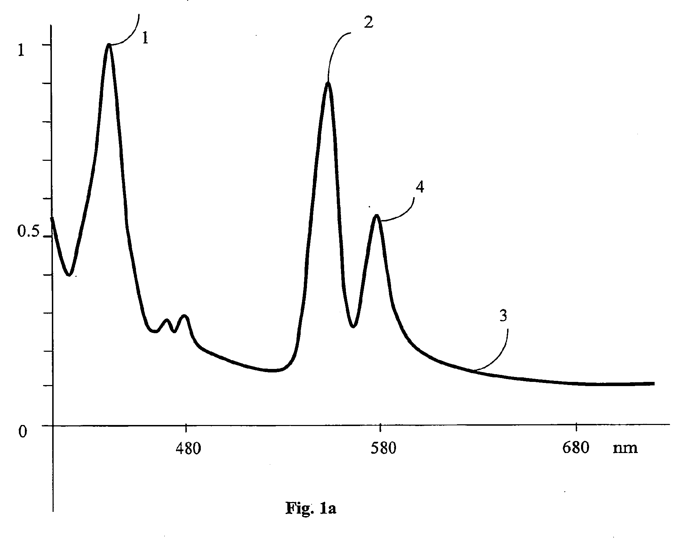

Fig. 1a schematically shows the spectrum of the light emitted by high-pressure mercury-vapor lamps; the X axis indicates the wavelength in nm (nanometers), while the Y axis indicates relative intensity.

Reference number 1 approximately designates the emission area of blue; reference number 2 designates the emission area of green, and reference number 3 designates the emission area of red.

As shown, the emission is particularly critical both because of the low energy emitted in the red range and, most of all, because of the emission peak at 575÷580nm, which corresponds to the spurious yellow component located between green and red and designated by reference number 4.

In these lamps, cutting the component of the secondary yellow colour in order to obtain saturated primary colours means to lose much of the energy produced by the lamp, resulting in a dark image.

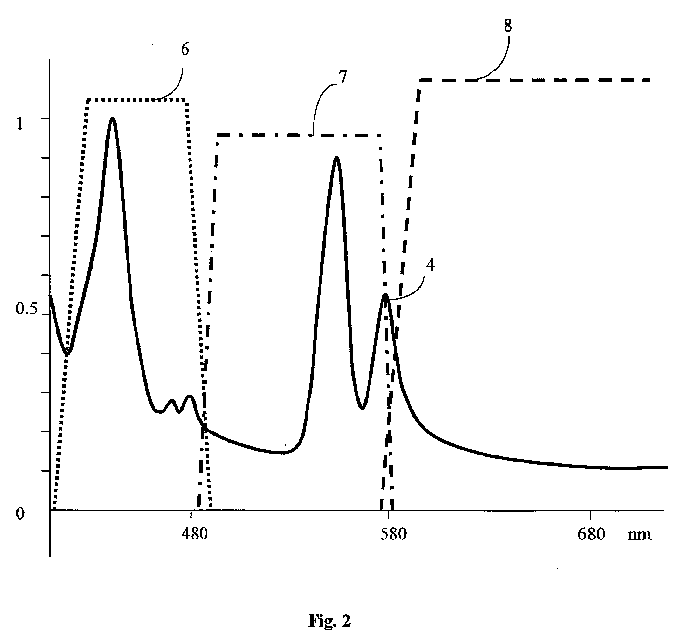

De facto, therefore, what happens in known solutions is that the filters used in the optical system of videoprojectors provide a response like the one shown in Fig. 2, wherein the dotted line indicated by reference number 6 represents the response curve of the band-pass filter of the blue colour, the dashed-dotted line 7 represents the response curve of the band-pass filter of the green colour, and the dashed line 8 represents the response curve of the band-pass filter of the red colour. As highlighted in Fig. 2, in order to prevent an excessive reduction in brightness, the green and red filters used in known solutions let through a portion of the peak of the yellow colour, so that the primary green and red colours are not saturated due to said peak, which makes green become "pea-green" and red become "orange".

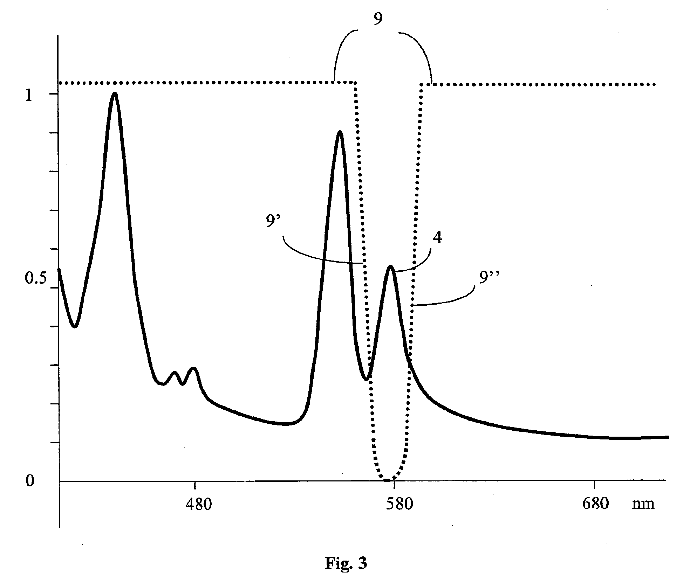

This drawback is typically overcome by adding a permanent band-cut filter along the optical path in order to attenuate or eliminate the spurious yellow component from the light beam. The response curve of this type of band-cut filter, also known as "notch" filter, is represented schematically in Fig. 3 by the dotted line 9; as shown, the filter absorbs the spectral components comprised approximately between 570 and 600 nm.

The filter flanks, designated by reference numbers 9' and 9" in Fig. 3, should be as steep as possible, so as to block only the undesired spurious colour and to allow the other spectral components of the beam to pass through unchanged.

The drawback of this solution is that, although the green and red colours are saturated, the overall brightness turns out to be strongly reduced.

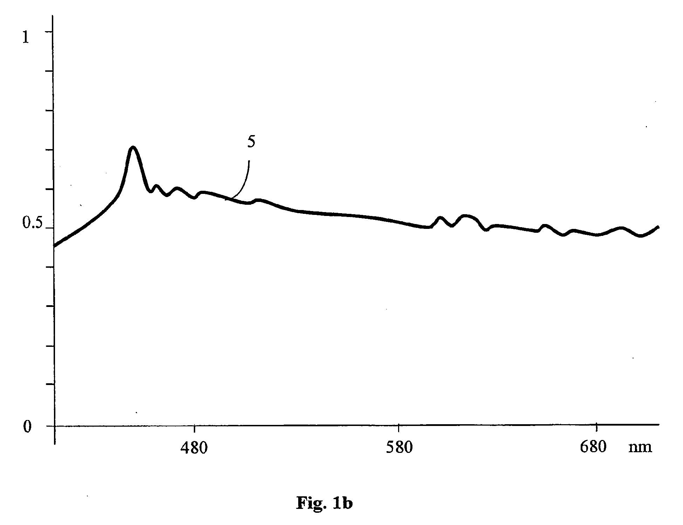

Similarly, when xenon lamps are used (Fig. 1b), even though the emission is more uniform, at least in the visible spectrum, than that of mercury-vapour lamps, it can be noted that in the area around 500 nm designated by reference number 5, i.e. the area of the secondary cyan colour, the luminous energy is high enough to affect the reproduction of the saturated blue and green colours.

Therefore, these lamps also suffer from the same problems as the above-described solutions, the only difference being that the component which gives the most troubles is cyan. According to another known solution, sometimes used in videoprojectors having a single DMD panel, to obtain more saturated primary colours, the colour wheel comprises four sectors: blue, green, red and yellow.

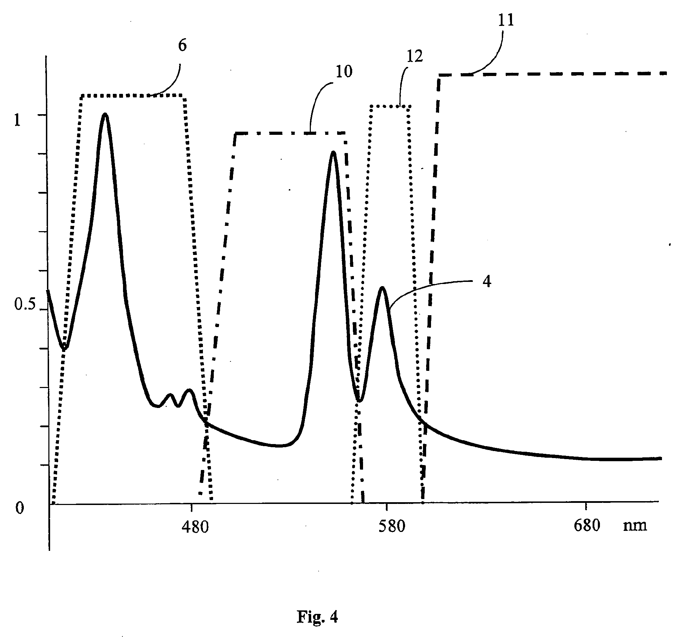

Thus, the single band-pass filters of the colour wheel can be narrower, as shown in Fig. 4, wherein reference number 12 designates the response of the band-pass filter of the yellow sector and numbers 6, 10 and 11 designate the responses of the filters for the blue, green and red colours, respectively.

In order to limit the decrease the brightness, the system uses information obtained by processing the video signal electronically as detailed below.

As known, the images of a videoprojector are made up of a sequence in time of frames, each of which contains information for controlling the status of the pixels forming the image.

Such information, before being physically sent to the panel, are stored in suitable frame memories; in particular, information about the three primary red, green and blue components of the video signal are stored for each pixel.

During the electronic processing of the video signal, the information relating to each frame is checked in order to establish the chromatic contents of the image, in particular, in the case under examination, in order to determine the fractions of pure primary colours in relation to the secondary components which can possibly be present even in the formation of white light. If, for example, a frame is made up mainly of saturated red and green colours, the operation of the DMD panel during the projection of such a frame will be interrupted when the light of the yellow sector is sent, thus preventing the primary green and red colours projected onto the screen from being altered.

Vice versa, if the image contains mainly areas wherein the predominant component is yellow light or can be combined with yellow light, the panel will remain always on during the corresponding frame, thus sending to the screen all the light produced by the lamp, including the yellow one, in order to obtain the maximum brightness.

In intermediate signal situations, the pixel adjustment time during the transition of the yellow sector of the colour wheel will be adequately adjusted, for example, according to the user's preferences.

However, this solution has many drawbacks as well.

First of all, the luminous energy associated with each primary colour is low both because of the band-pass filter having a narrower passband and because of the reduction in the transmission time of each primary colour (since the wheel has four sectors).

Also, the transition times during which the DMDs are "turned off" are longer (resulting in known drawbacks).

US Patent Application n. 2004/0135975 discloses a multi-function projection system in which yellow beam passes through red and green filters by means of coating, and is cut off by a band-cut filter. Then, a driver selectively brings the band-cut filter into or off the light path. Therefore, the projection system will be selected so that the screen achieves optimum brightness for use in a briefing or achieves optimum color saturation for use in enjoying movies.

The object of the present invention is to solve the problems of the videoprojector apparatus solutions known in the art.

In particular, the object of the present invention is to obtain primary colours being as saturated as possible, while maximizing image brightness.

These and further objects of the present invention are achieved through a projection apparatus and a method for adjusting a light beam in a projection system incorporating the features set out in the appended claims, which are intended as an integral part of the present description. In brief, the present invention is based on the idea of attenuating the spectral components of a light beam dynamically based on information relating to the colours of an image to be projected. To this end, the projection apparatus according to the present invention is provided with at least one movable band-cut filter which is capable of eliminating, within the visible range, a variable quantity of spurious components (such as yellow or cyan colour) from the light beam generated by the lamp.

The movability of said filter advantageously allows to obtain, depending on the images to be projected, the best compromise between image brightness and saturation of the primary red, green and blue colours.

Advantageously, in the case of a video signal, the filter position can therefore be updated on a frame basis by utilizing the information supplied by the RGB signals.

Further objects and advantages of the present invention will become apparent from the following detailed description and from the annexed drawings, which are supplied by way of non-limiting example, wherein:
- Figs. 1a and 1b show the emission spectrum of lamps commonly used in videoprojector appliances.
- Figs. 2 and 4 show the emission spectrum of a mercury-vapour lamp and the response curves of band-pass filters used in known videoprojector appliances.
- Fig. 3 shows the emission spectrum of a mercury-vapour lamp and the response curve of a band-cut filter adapted to cut yellow frequencies.
- Fig. 5 shows the emission spectrum of a xenon lamp and the response curve of a band-cut filter adapted to cut cyan frequencies.
- Fig. 6 schematically shows an example of a first embodiment of a projection apparatus according to the invention.
- Fig. 7 schematically shows an example of a second embodiment of a projection apparatus according to the invention.

For simplicity's sake, means which are identical, equivalent or adapted to perform the same function will be hereafter referred to by using the same reference numbers.

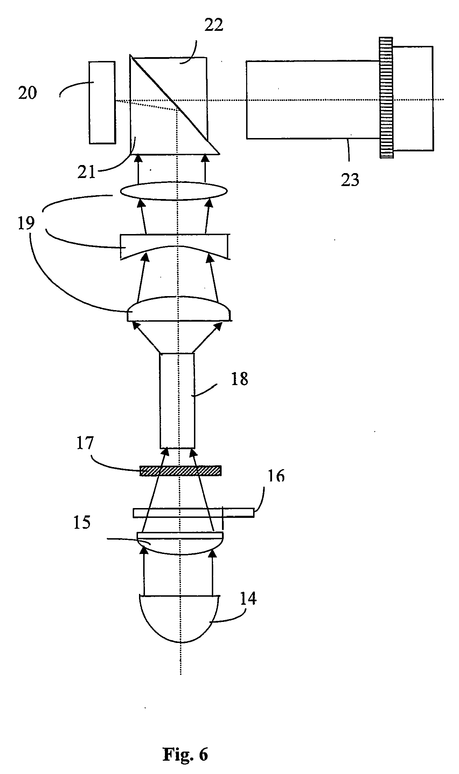

Let us now consider, as an example of a non-limiting embodiment example, a videoprojector apparatus like the one shown in Fig. 6, wherein the light source is a mercury-vapor lamp (whose emission spectrum is shown in Fig. 1a) and, as already mentioned, suffers from the drawback of a significant yellow component.

In this embodiment example, the videoprojector uses only one DMD panel designated by reference number 20.

Illumination lamp 14 generates a light beam that is collected by aspheric condenser 15, which focuses said light beam at the inlet of integrating bar 18 (consisting of an optical-glass parallelepipedon), which spatially smoothes the light beam coming from the lamp.

Between aspheric condenser 15 and integrating bar 18 there is a three-sector colour wheel 16, which sequentially outputs spectral components comprised in three bands corresponding to the bands of the three primary red, blue and green colours.

The light output by the integrating bar is collected by a system of lenses 19, known as relay lenses, which convey the focused light towards the DMD panel, designated by reference number 20, through the system of prisms designated by reference numbers 21 and 22.

The light beam is then sent to the projection lens, designated by reference number 23, and subsequently to a screen, not shown in Fig. 6.

According to the invention, the projection apparatus comprises a band-cut filter 17 which cuts a band within the visible range; said filter 17 is required in order to eliminate the spurious component (in this case yellow light), and is inserted close to the input of bar 18.

In a preferred embodiment, filter 17 may be a notch filter adapted to attenuate a certain frequency band determined as shown in Fig. 3.

The projection apparatus also comprises moving means (not shown) adapted to dynamically change the position of said band-cut filter relative to the optical path of the light beam.

In the preferred solution, said moving means, which may comprise known piezoelectric or VoiceCoil actuators, allow to translate filter 17 in a direction being orthogonal to that of light propagation, so as to intersect the light beam dynamically and to attenuate a variable quantity of yellow light from the light beam.

The position of filter 17 is determined by a logic control unit which controls the moving means.

According to the invention, the position of filter 17 is determined after the image to be projected has been processed numerically, in particular by using at least one piece of information relating to the colours of the image to be projected.

Said at least one piece of information relating to the image colours is contained in a memory area of said apparatus being accessible to the logic unit.

In an example of a preferred embodiment, the projection apparatus is a videoprojector, i.e. an apparatus fitted with a video input adapted to receive a video signal and with a frame memory adapted to store at least one frame of the video signal in order to carry out known signal processings, such as deinterlacing, scaling etc...

As known, one component of the video signal is given by the RGB signals used for identifying the colour components of the single pixels of the image, i.e. of a frame of the video signal.

Therefore, the frame memory of the videoprojector contains information relating to the RGB components of the frame pixels of the received video signal.

Based on said information relating to the image colours, in particular supplied by the RGB signals, the processing unit first determines the quantity of yellow component being present in the image and then determines the position of filter 17 accordingly.

Said position will depend on a choice between the desired brightness and the necessity of obtaining (depending on the image) saturated primary colours.

Advantageously, for each frame the control unit carries out an evaluation of the quantity of yellow being present in the frame to be projected, and subsequently re-determines the position of the filter relative to the optical path of the light.

Although a considerable variation of yellow colour between one frame and the next is not reasonably conceivable, the moving means should preferably be adapted to move band-cut filter 17 from a position of full interference with the whole spot (i.e. a section being transversal to the propagation direction) of the light beam to a non-interference position within a time being substantially shorter than 20 ms (corresponding to the frame frequency of a PAL video signal) or preferably shorter than 16.6 ms (corresponding to the frame frequency of an NTSC type video signal).

Preferably, filter 17 should be so inserted that the light beam is not distorted; this means that the reduction of yellow must be homogeneous in the beam, without being limited to the beam portion intercepted by the filter.

For this purpose, the filter may for example be placed along the optical path upstream of the inlet of the beam into the integrating bar. Thus, thanks to the action performed by the bar, the yellow component will be reduced evenly over the whole output beam, even if at the bar inlet only a portion of the light beam is deprived of yellow.

The advantages of the proposed system are apparent from the above description.

Firstly, it is possible to keep the passbands of the red and green filters as wide as possible, for example like those shown in Fig. 2, while ensuring, whenever necessary, the saturation of the primary colours by mechanically inserting filter 17 in the optical path of the light beam in order to remove the yellow light component from the beam.

Also, as far as high-pressure mercury-vapor lamps are concerned, the projection apparatus according to the invention allows to obtain a white not having an excessive colour temperature (i.e. cold) without having to reduce the quantity of green and blue too much.

In these lamps, in fact, the produced light has a high colour temperature due to a low percentage of radiation emitted in the spectral region of red, as clearly shown in Fig.1a. Furthermore, as mentioned above, according to the prior art the saturation of said red colour is ensured by further reducing the range of the wavelengths used, and consequently the energy associated with said colour.

It follows that, in known solutions, obtaining a white not having an excessive colour temperature (i.e. cold) requires a reduction in the energy of the green and blue components, resulting in a considerable reduction in brightness.

Although the above-described preferred embodiment example relates to a videoprojector having a single DMD panel and a light source being of the high-pressure mercury-vapor type, it is clear that the invention is not limited to said embodiment example and that many changes may be made thereto by the man skilled in the art without departing from the spirit of the invention resulting from the present description and from the appended claims.

In fact, the projection apparatus may be of a type utilizing one or three panels of different kinds: DMD, LCD (Liquid Crystal Display) or LCoS (Liquid Crystal on Silicon).

Likewise, different solutions may be adopted for conveying and guiding the radiation emitted by the light source. By way of example, the aspheric condenser and the integrating bar may be replaced, in a per se known way, an array of suitably arranged lenses (also known as "fly's-eye lenses").

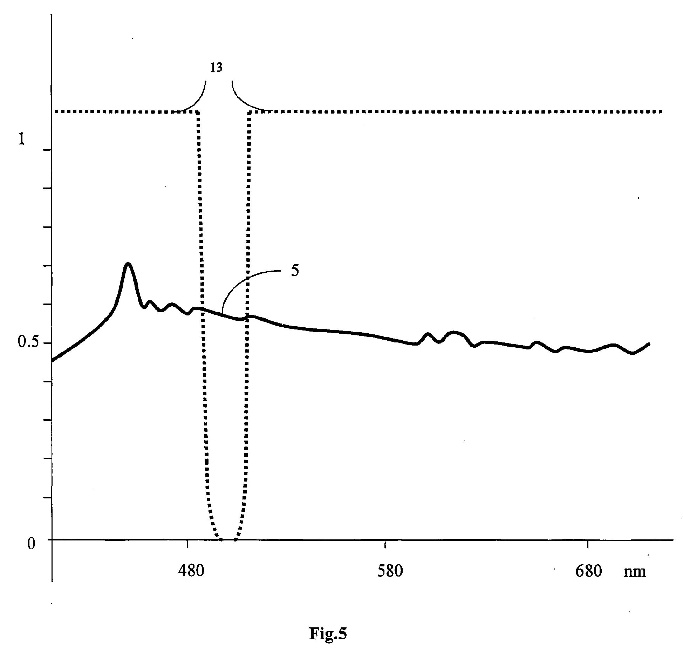

Also, the light source may be of a different type from the one described above: instead of a mercury-vapor lamp, it is possible to use a xenon lamp. In this case, due to the emission spectrum of the lamp, it is preferable to eliminate the cyan colour component from the emitted radiation, and therefore filter 17 shall be adapted to cut those beam components having a wavelength approximately between 490 nm and 520 nm. An example of such a filter is shown in Fig. 5, wherein the continuous line represents the emission spectrum of a xenon lamp and the dashed line represents the band absorbed by filter 17.

Of course, the present invention is not limited to the band of frequencies cut by band-cut filter 17 (which, however, for image or video projection applications should preferably be within the visible range) nor to the number of band-cut filters in use.

Depending on the light sources employed and on the degree of complexity allowed by the system, it is in fact possible to use one or more dynamic band-cut filters, i.e. driven through actuators controlled by a control unit based on information relating to the colours of the image to be projected.

It is also apparent that band-cut filter 17 may be placed in different locations of the video-projection apparatus.

For example, filter 17 may be positioned near (preferably inside) a stop located along the optical path of the light beam.

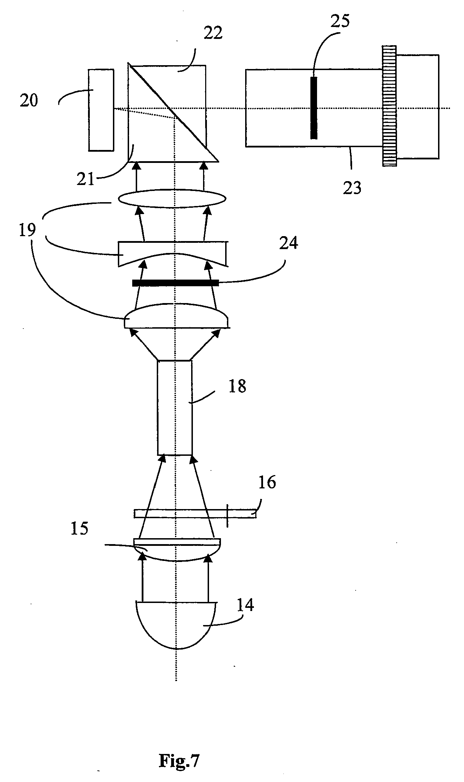

In the projection apparatus schematized in Fig. 7, two possible positions of a stop located along the optical path of the light beam are provided: reference number 24 designates the stop of the system of relay lenses 19, whereas reference number 25 designates the stop of the projection lens 23.

Usually it turns out to be easier and more advantageous to insert the band-cut filter inside the stop of the system of relay lenses 19; nevertheless said band-cut filter may also, in addition or as an alternative, be inserted inside the stop of the projection lens, if allowed by the mechanical configuration of the lens.

It is also clear that many variations are possible by changing the optical and mechanical elements which define the optical path of the light beam inside the projection apparatus according to the invention.

In a further variation, for example, the band-cut filter may be fixed, while a system of movable mirrors may be used for modifying the optical path of the light beam so as to change the position of said band-cut filter relative to the optical path of the light beam.

## Claims

1. Projection apparatus comprising:
- a light source adapted to generate a visible light beam comprising a plurality of spectral components,
- optical means adapted to define an optical path of said light beam between said light source and at least one projection lens,
- at least one band-cut filter (17) adapted to attenuate a spectral band of said light beam, and interposed between said light source and said projection lens, and
- moving means adapted to change the position of said at least one band-cut filter (17) relative to said optical path, **characterized in that**
said projection apparatus further comprises
- a video input adapted to receive a video signal,
- a memory area adapted to store at least one frame of said video signal,
- a logic control unit being operationally connected to said memory area and being adapted to control said moving means to dynamically change the position of said at least one band-cut filter (17) based on one or more pieces of information relating to the colours of said frame to be projected.

2. Apparatus according to claim 1, **characterized in that** said moving means are adapted to move said at least one band-cut filter (17) from a position of interference with the whole spot of said light beam to a non-interference position within a time being substantially shorter than 20 ms or 16.6 ms.

3. Apparatus according to any of the preceding claims, **characterized in that** said at least one band-cut filter (17) is fixed, and that said moving means are adapted to modify the optical path of the light beam.

4. Projection apparatus according to any of the preceding claims, wherein said at least one piece of information relating to the colours of said frame is supplied by thee RGB signals of said video signal.

5. Projection apparatus according to any of the preceding claims, **characterized in that** said band-cut filter (17) is located near, preferably inside, a stop (24, 25) arranged along the optical path of said light beam.

6. Projection apparatus according to claim 5, **characterized in that** said stop (24) is located in the system of relay lenses (19).

7. Projection apparatus according to claim 6, **characterized in that** said stop (25) is located in the projection lens (23).

8. Projection apparatus according to any of the preceding claims, wherein said band-cut filter (17) is adapted to attenuate radiations having a wavelength between 570 and 600 nm.

9. Projection apparatus according to any of the preceding claims, wherein said band-cut filter (17) is adapted to attenuate radiations having a wavelength between 490 and 520 nm.

10. Projection apparatus according to any of the preceding claims, **characterized by** comprising at least two band-cut filters (17) adapted to attenuate distinct frequency bands.

11. Method for adjusting a light beam in a projection system in which a light source generates a visible light beam comprising a plurality of spectral components, **characterized by** performing, through a band-cut filter, a dynamic attenuation of at least one spectral band of said light beam based on one or more pieces of information relating to the colours of at least one frame to be projected, said attenuation being performed depending on one or more pieces of information relating to the colours of a frame of a video signal received at a video input by a logic control unit operationally connected to a memory area that is adapted to store at least one frame of said video signal.

12. Method according to claim 12, **characterized in that** said dynamic attenuation is obtained by changing the position of said band-cut filter (17) dynamically relative to an optical path of said light beam.

13. Method according to claim 12 or 13, **characterized by** performing said attenuation as a function of the RGB components of a video signal received by said projection system.

## Patentansprüche

1. Projektionsvorrichtung, umfassend:
- eine Lichtquelle zur Erzeugung eines sichtbaren Lichtstrahls, welcher eine Vielzahl von Spektralkomponenten umfasst,
- optische Mittel zum Vorgeben eines Strahlenganges von besagtem Lichtstrahl zwischen besagter Lichtquelle und zumindest einer Projektionslinse,
- zumindest einen Bandfilter (17) zum Dämpfen eines Spektralbands von besagtem Lichtstrahl, der zwischen besagter Lichtquelle und besagter Projektionslinse eingeführt ist und
- Bewegungsmittel, welche zum Verändern der Position von besagtem zumindest einen Bandfilter (17) relativ zu dem besagten Strahlengang vorgesehen sind,
**dadurch gekennzeichnet,**
**dass** die besagte Projektionsvorrichtung weiterhin umfasst:
- einen Videoeingang, welcher zur Aufnahme eines Videosignals vorgesehen ist,
- eine Speicherfläche, welche zum Speichern von zumindest einem Bildfeld von besagtem Videosignal vorgesehen ist,
- eine logische Kontrolleinheit, welche in Arbeitsverbindung mit besagter Speicherfläche ist und
- welche zur Kontrolle von besagten Bewegungsmitteln zum dynamischen Ändern der Position von besagtem zumindest einen Bandfilter (17) basierend auf einer oder mehreren Informationen bezüglich der Farbe von dem besagten zu projizierendem Bildfeld vorgesehen ist.

2. Projektionsvorrichtung nach Anspruch 1,
**dadurch gekennzeichnet,**
**dass** besagte Bewegungsmittel zum Bewegen von zumindest einem Bandfilter (17) von einer Interferenzposition mit dem gesamten Spot von besagtem Lichtstrahl zu einer Nicht-Interferenzposition innerhalb einer Zeit, welche wesentlich kürzer als 20 ms oder 16,6 ms ist, vorgesehen sind.

3. Projektionsvorrichtung nach einem der vorhergehenden Ansprüche,
**dadurch gekennzeichnet,**
**dass** zumindest ein Bandfilter (17) fest ist, und dass besagte Bewegungsmittel zum Verändern des optischen Weges des Lichtstrahls vorgesehen sind.

4. Projektionsvorrichtung nach einem der vorhergehenden Ansprüche, wobei zumindest eine Information bezüglich der Farbe von besagtem Bildfeld über ein RGB-Signal von besagtem Videosignal bereitgestellt ist.

5. Projektionsvorrichtung nach einem der vorhergehenden Ansprüche,
**dadurch gekennzeichnet,**
**dass** besagter Bandfilter (17) nahe, vorzugsweise innerhalb eines Stoppers (24, 25) angebracht ist, welcher entlang des Stahlenganges von besagtem Lichtstrahl vorgesehen ist.

6. Projektionsvorrichtung nach Anspruch 5,
**dadurch gekennzeichnet,**
**dass** besagter Stopper (24) in dem System von Relaylinsen (19) vorgesehen ist.

7. Projektionsvorrichtung nach Anspruch 6,
**dadurch gekennzeichnet,**
**dass** besagter Stopper (25) in der Projektionslinse (23) vorgesehen ist.

8. Projektionsvorrichtung nach einem der vorhergehenden Ansprüche, wobei besagter Bandfilter (17) zum Dämpfen von Strahlung mit einer Wellenlänge zwischen 570 und 600 nm vorgesehen ist.

9. Projektionsvorrichtung nach einem der vorhergehenden Ansprüche, wobei besagter Bandfilter (17) zum Dämpfen einer Strahlung mit einer Wellenlänge zwischen 490 und 520 nm vorgesehen ist.

10. Projektionsvorrichtung nach einem der vorhergehenden Ansprüche,
**dadurch gekennzeichnet,**
**dass** diese zumindest zwei Bandfilter (17) umfasst, welche zum Dämpfen von bestimmten Frequenzbändern vorgesehen sind.

11. Verfahren zur Einstellung eines Lichtstrahls in einem Projektionssystem, in welchem eine Lichtquelle einen sichtbaren Lichtstrahl erzeugt, welcher eine Vielzahl von Spektralkomponenten umfasst,
**dadurch gekennzeichnet,**
**dass** mit einem Bandfilter eine dynamische Dämpfung von zumindest einem Spektralband von besagtem Lichtstrahl basierend auf einem oder mehreren Informationen bezüglich der Farbe von zumindest einem zu projizierenden Bildfeld durchgeführt wird, wobei besagte Dämpfung abhängig von einer oder mehreren Informationen bezüglich der Farbe von einem Bildfeld eines Videosignals abhängt, welches an einem Videoeingang über eine logische Kontrolleinheit aufgenommen wird, die operativ mit einer Speicherfläche verbunden ist, die zum Speichern von zumindest einem Bildfeld von besagtem Videosignal vorgesehen ist.

12. Verfahren nach Anspruch 11,
**dadurch gekennzeichnet,**
**dass** besagte dynamische Dämpfung durch dynamisches Ändern der Position von besagtem Bandfilter (17) relativ zu einem optischen Weg von besagtem Lichtstrahl erreicht wird.

13. Verfahren nach Anspruch 11 oder 12,
**dadurch gekennzeichnet,**
**dass** besagte Dämpfung als eine Funktion der RGB-Komponenten eines über besagtes Projektionssystem empfangenen Videosignals durchgeführt wird.

## Revendications

1. Appareil de projection comportant :
- une source de lumière adaptée pour générer un faisceau lumineux visible comprenant une pluralité de composantes spectrales,
- des moyens optiques adaptés pour définir un parcours optique dudit faisceau lumineux entre ladite source de lumière et au moins une lentille de projection,
- au moins un filtre coupe-bande (17) adapté pour atténuer une bande spectrale dudit faisceau lumineux, et interposé entre ladite source de lumière et ladite lentille de projection, et
- des moyens de déplacement adaptés pour modifier la position dudit au moins un filtre coupe-bande (17) par rapport au dit parcours optique, **caractérisé en ce que** ledit appareil de projection comporte, de plus
- une entrée vidéo adaptée pour recevoir un signal vidéo,
- une zone de mémoire adaptée pour stocker au moins une trame dudit signal vidéo,
- une unité logique de commande qui est connectée fonctionnellement à ladite zone de mémoire et adaptée pour commander lesdits moyens de déplacement afin de modifier de façon dynamique la position dudit au moins un filtre coupe-bande (17) sur la base d'une ou de plusieurs donnée(s) d'information concernant les couleurs de ladite trame à projeter.

2. Appareil selon la revendication 1, **caractérisé en ce que** lesdits moyens de déplacement sont adaptés pour déplacer ledit au moins un filtre coupe-bande (17) d'une position d'interférence avec le spot complet dudit faisceau lumineux à une position de non interférence en un laps de temps qui est essentiellement plus court que 20 ms ou 16,6 ms.

3. Appareil selon l'une quelconque des revendications précédentes, **caractérisé en ce que** ledit au moins un filtre coupe-bande (17) est fixe, et **en ce que** lesdits moyens de déplacement sont adaptés pour modifier le parcours optique du faisceau lumineux.

4. Appareil de projection selon l'une quelconque des revendications précédentes, dans lequel ladite au moins une donnée d'information concernant les couleurs de ladite trame est fournie par les signaux RGB dudit signal vidéo.

5. Appareil de projection selon l'une quelconque des revendications précédentes, **caractérisé en ce que** ledit filtre coupe-bande (17) est placé à proximité, de préférence à l'intérieur, d'un dispositif d'arrêt (24, 25) disposé le long du parcours optique dudit faisceau lumineux.

6. Appareil de projection selon la revendication 5, **caractérisé en ce que** ledit dispositif d'arrêt (24) est placé dans le système des lentilles relais (19).

7. Appareil de projection selon la revendication 6, **caractérisé en ce que** ledit dispositif d'arrêt (25) est placé dans la lentille de projection (23).

8. Appareil de projection selon l'une quelconque des revendications précédentes, dans lequel ledit filtre coupe-bande (17) est adapté pour atténuer des rayonnements présentant une longueur d'onde comprise entre 570 et 600 nm.

9. Appareil de projection selon l'une quelconque des revendications précédentes, dans lequel ledit filtre coupe-bande (17) est adapté pour atténuer des rayonnements présentant une longueur d'onde comprise entre 490 et 520 nm.

10. Appareil de projection selon l'une quelconque des revendications précédentes, **caractérisé par** le fait de comporter au moins deux filtres coupe-bande (17) adaptés pour atténuer des bandes de fréquences distinctes.

11. Procédé permettant de régler un faisceau lumineux dans un système de projection dans lequel une source de lumière génère un faisceau lumineux visible comportant une pluralité de composantes spectrales, **caractérisé par** le fait d'effectuer, à travers un filtre coupe-bande, une atténuation dynamique d'au moins une bande spectrale dudit faisceau lumineux sur la base d'une ou de plusieurs donnée(s) d'information concernant les couleurs d'au moins une trame à projeter, ladite atténuation étant réalisée en fonction d'une ou de plusieurs donnée(s) d'information concernant les couleurs d'une trame d'un signal vidéo reçu au niveau d'une entrée vidéo par une unité logique de commande connectée fonctionnellement à une zone de mémoire qui est adaptée pour stocker au moins une trame dudit signal vidéo.

12. Procédé selon la revendication 11, **caractérisé en ce que** ladite atténuation dynamique est obtenue en modifiant la position dudit filtre coupe-bande (17) de façon dynamique par rapport à un parcours optique dudit faisceau lumineux.

13. Procédé selon la revendication 11 ou 12, **caractérisé par** le fait d'effectuer ladite atténuation en fonction des composantes RGB d'un signal vidéo reçu par ledit système de projection.
